# EUROPEAN PATENT SPECIFICATION

(11) **EP 1 046 976 B1**
(45) Date of publication and mention of the grant of the patent: **19.07.2006**
(21) Application number: 00303212.5
(22) Date of filing: 17.04.2000
(51) Int. Cl.: G06F 1/00

(54) **Method and apparatus for enabling a user to authenticate a system prior to providing any user-privileged information**
Verfahren und Gerät, die einem Rechnerbenutzer erlauben, vor der Eingabe von privilegierten Informationen ein System zu authentifizieren
Méthode et appareil pour permettre à un utilisateur d'authentifier un système avant la présentation d'informations privilégiées

(30) Priority: 20.04.1999 US 294518
(43) Date of publication of application: 25.10.2000
(73) Proprietor: SUN MICROSYSTEMS, INC., Palo Alto, California 94303 (US)
(72) Inventor: Merriam, Charles, Sunnyvale, California 94087 (US)
(74) Representative: Cross, Rupert Edward Blount

(56) References cited:
- WO-A-99/12308
- US-A- 5 665 952
- MENEZES ALFRED ET AL: "Handbook of applied cryptography" HANDBOOK OF APPLIED CRYPTOGRAPHY, CRC PRESS SERIES ON DISCRETE MATHEMATICES AND ITS APPLICATIONS, BOCA RATON, FL, CRC PRESS, US, 1997, pages 1,397-405, XP002954614 ISBN: 0-8493-8523-7
- BENNET YEE: "Using Secure Coprocessors" THESIS SUBMITTED TO THE SCHOOL OF COMPUTER SCIENCE FOR THE DEGREE OF DOCTOR OF PHILOSOPHY, XX, XX, May 1994 (1994-05), page COMPLETE, XP002120312

## Description

### Background

This invention relates generally to secured systems and more particularly to a method and apparatus for enabling a user to authenticate a system prior to providing any user privileged information to the system.

In any secured system, one of the issues that is of utmost concern is that of party authentication. That is, how do the parties know that the other party is who or what they claim to be? With the proliferation of electronic commerce in recent years, this issue has been brought to the forefront. In response to this problem, a myriad of possible solutions have been devised.

One possible solution involves the use of a personal identification number (PIN). In a simple PIN-based system, whenever a user conducts a transaction with a host system, such as an automatic teller machine (ATM), the user provides to the host system some physical token, such as an ATM card, which identifies the user to the host. This token typically contains some specific information pertaining to the user, such as the user's name, the user's account number, the type of the account, etc. In addition to the token, the user also provides to the host (in response to a prompt) a secret PIN that was previously established between the user and the entity controlling the host (such as a bank). Based on the information stored on the token and the PIN provided by the user, the host determines whether it is transacting with an authorized user. Presumably, only the user or people authorized by the user will have knowledge of the PIN, so that if the correct PIN is provided to the host, the host is reasonably assured that it is transacting with a proper user. In this manner, the host authenticates the user.

An alternative and more sophisticated solution involves the use of an active token. An active token, also referred to herein as a client, is different from the token mentioned above in that it has its own processing capability. Because it has its own processing capability, the client can interact with the host in a more sophisticated manner that adds an extra layer of security to the system. In the present context, a client can be anything having processing capability, including but not limited to a smart card and a personal computer.

In a client-host system, a typical transaction takes place in the following manner. First, the user initiates interaction between the client and the host. This may be done, for example, by inserting a smart card into a host system. Thereafter, it is up to the client and the host to authenticate each other. This is typically achieved by way of a two way challenge and response protocol, whereby the client sends a challenge to the host and receives a response, and the host sends a challenge to the client and receives a response. Further interaction between the two components will take place only if both entities receive appropriate responses to their respective challenges, thereby authenticating each other. Thereafter, the host authenticates the user by prompting the user for a PIN. Only if the PIN entered by the user is correct will the host allow a transaction to take place. In this manner, all parties involved in the transaction (host, active token, and user) are authenticated.

In addition to the authentication schemes just described, other schemes are currently known and available which modify/enhance the basic authentication capabilities. For the most part, most of these schemes are in the same vein as the schemes described above.

An observation that can be made about the currently available solutions is that they are primarily focused upon two specific aspects of the authentication problem: (1) enabling the host system to authenticate the user; and (2) enabling the client and host to authenticate each other. In these areas, the current solutions are adequate for the most part. However, one aspect that is sorely missing from all of the currently available solutions is the ability for the user to authenticate the host system. Notice in the above schemes that the user enters his PIN in response to a prompt from the host. At the time that the user enters the PIN, the user has no assurance that the host is authentic. For all the user knows, he could be entering his PIN into a fraudulent host. Currently, the user has to assume or take on faith that the host is an authentic host. Unfortunately, this faith is sometimes misplaced, causing the user to enter his PIN into a fraudulent host, thereby allowing the PIN to be stolen.

One arrangement that has been used to steal a PIN from a user is the following. A perpetrator builds a fake host and places it in a likely location, such as near a bank or a grocery store. The fake host looks and acts in all superficial respects like an authentic host. When a user inserts his token (either active or inactive) into the fake host, the host performs one of two actions: (1) if possible, it reads the token to extract therefrom the identification information pertaining to the user; or (2) it simply accepts the token. Then, the fake host prompts the user for his PIN. Once the user enters his PIN, the fake host has accomplished its mission, which is to steal the user's PIN. An important point to note here is that the purpose of the fake host is steal the PIN, not to perform an on-the-spot transaction. Because the host is not trying to conduct a transaction, it does not need to interact with the token at all. As a result, the host authentication capability offered by active tokens is rendered useless. The above arrangement can be used to steal PIN's in both PIN based and client-host systems.

Once the PIN has been stolen, several scenarios can arise. First, the fake host can simply retain the token. At some later time, the perpetrator can retrieve the token from the fake host and use it, along with the PIN, to conduct a variety of transactions at the user's expense. Alternatively, if the fake host is able to extract user identification information from the token, the fake host can return the token to the user with a message that a transaction cannot be conducted at this time. Armed with the identification information and the PIN, the perpetrator can still perform a wide variety of transactions, even in the absence of the physical token. The advantage to the perpetrator of returning the token to the user is that the user most likely will not even suspect that his PIN has been stolen. If this is the case, the perpetrator will have a fairly long period of time (probably until the user's next statement) during which to conduct fraudulent transactions. As an additional possibility, once the PIN has been ascertained, the user could be assaulted and robbed of the physical token. In any of these scenarios, the user will suffer some loss. At best, it will be some measure of inconvenience. At worst, it could be significant financial and/or physical loss.

As the above discussion shows, the inability of a user to authenticate a host system can lead to great pitfalls for the user. The current authentication schemes do not provide an adequate solution to this problem.

Document WO 99/12308 discloses a system for performing regulated transactions with a network that is commonly accessible by a plurality of communication terminals.

### Summary of the Invention

There is provided a method implemented by a client for enabling a user to authenticate a host as set out in claim 1 and a client for interacting with a host as set out in claim 4. There is also provided a method implemented by a host for enabling a user to authenticate a host as set out in claim 6 and a host which enables a user to authenticate the host as set out in claim 8.

To overcome the shortcomings of the prior art, the present invention provides a mechanism for enabling a user to authenticate a system. This authentication is performed prior to the user entering any user-privileged information into the system, so that theft of user-privileged information by a fraudulent system is prevented. As used herein, the term user-privileged information refers broadly to any information that is used by a system to authenticate a user, including but not limited to a PIN or an encryption key.

The present invention may be implemented in any type of system, including a host-based system and a client-host system. In a host-based system, the user initiates interaction with a host by providing some user identification information to the host. This information may include the name of the user, an account number, etc., but does not include any user-privileged information. In response, the host uses the user identification information to retrieve a unique message associated with the user. In one embodiment, this unique message is a secret message that was previously established between the user and the host. The message may be a text message, a sound, a graphical display, or anything that is distinctive. Once retrieved, the unique message is sent by the host to the user along with a prompt for some user-privileged information.

Only if the message sent by the host is the same as that expected by the user will the user provide the requested user-privileged information. Presumably, only an authentic host will know or have access to the unique message; thus fake host systems will not be able to send the proper message. If the proper message is not sent to the user, the user will not provide the user-privileged information to the host. In this manner, a user is allowed to authenticate a host, thereby preventing theft of user-privileged information by a fraudulent host.

With some modification, this same result can be achieved in a client-host system. Specifically, when a user initiates interaction between a client and a host, the client performs an authentication check on the host. This authentication check can be performed using any known authentication technique, including but not limited to a challenge/response protocol. If the client determines that the host is an authentic host, then the client sends a unique message signifying to the user that the host is authentic. In one embodiment, this message is stored on the client and is a secret message previously established between the user and the client. The unique message may be a text message, a sound, a graphical display, or any informaton that is distinctive. Note that in a client-host system, it is the client that sends the unique message. When a user receives the unique message, the user is assured that: (1) the client has interacted with the host; and (2) the host is an authentic host. Thus, if the host thereafter prompts the user for some user-privileged information, the user can rest assured that the host is an authentic host and that the user-privileged information can be entered safely. In this manner, the present invention enables a user to authenticate a host, thereby preventing a fraudulent host from obtaining user-privileged information from a user.

### Brief Description of the Drawings

Fig. 1 is block diagram of a client-host system in which the present invention may be implemented.
Fig. 2 is a flow diagram illustrating the client-host methodology of the present invention.
Fig. 3 is a block diagram of a host-based system in which the present invention may be implemented.
Fig. 4 is a flow diagram illustrating the host-based methodology of the present invention.
Fig. 5 is a block diagram of a general system in which the present invention may be implemented.

### Detailed Description of the Embodiment(s)

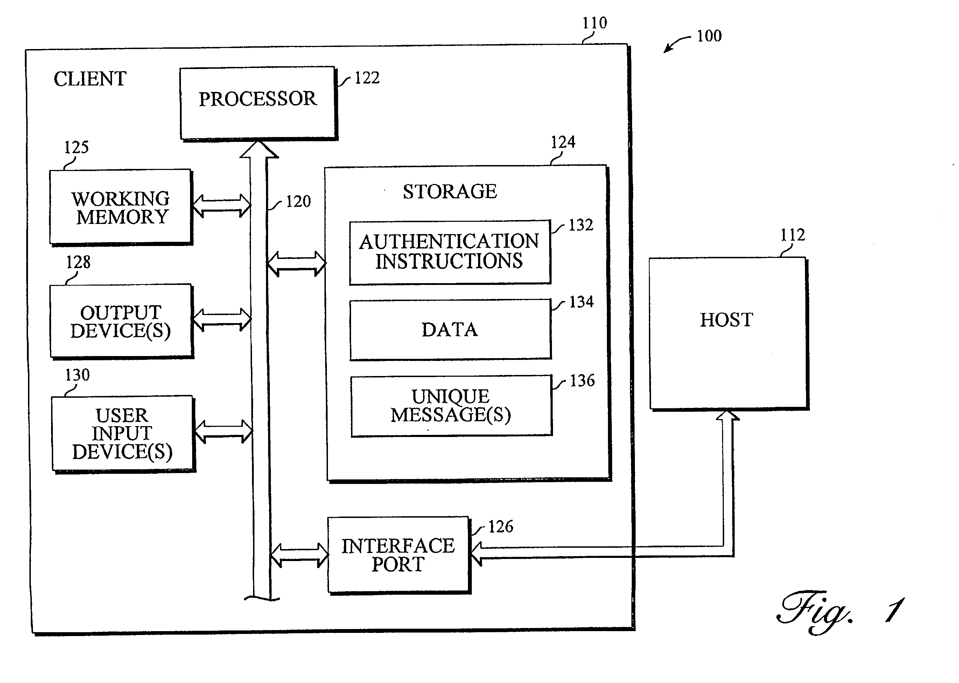

With reference to Fig. 1, there is shown a system 100 in which the present invention may be implemented, wherein the system 100 comprises a host 112 and a client 110 for interacting with the host 112. As used herein, the term client refers broadly to any system, apparatus, or machine having its own logic processing capability. In the system of Fig. 1, the general premise is that it is not known whether the host 112 is an authentic host. If the host 112 is a fake host, it could take on any one of a number of different configurations. Since the configuration of the host 112 cannot be predicted, and since it is for the most part irrelevant, the host 112 in Fig. 1 is represented simply as an empty box.

In system 100, it is the client 110 that is primarily responsible for carrying out the methodology of the present invention. The client 110 comprises a main bus 120 and a plurality of components coupled to the main bus 120, including a processor 122 and a storage 124. The storage 124, which may take the form of any storage medium including but not limited to magnetic media, optical media, and non-volatile memory, has stored in it a set of authentication instructions 132, one or more sets of data 134, and one or more unique messages 136. The authentication instructions 132 are executed by the processor 122 to carry out the authentication methodology of the present invention. The data 134, which may contain such information as encryption keys and the like, is used by the processor 122 in the course of executing the authentication instructions 132, and the unique messages 136, as discussed further below, are used by the processor 122 to signify to the user that the client 110 has interacted with the host 112, and that the host is an authentic host. In one embodiment, the unique messages are secret messages that are provided to the client 110 by the user prior to the client 110 interacting with the host 112. The unique messages 136 may take any form, including but not limited to that of a text message, an audio message or sound, or a graphical display of some kind. For example, the message could be a special text phrase ("How are the kids?"), a portion of the user's favorite song, a special icon, or a picture of something meaningful to the user. For purposes of the present invention, any information that is distinctive to the user that would normally not be known or guessed by a fraudulent host could be used as the unique message(s).

The client further comprises a working memory 125 and an interface port 126, both of which are coupled to the main bus 120. The working memory 125 is used by the processor 122 to facilitate instruction execution and data manipulation, and the interface port 126 is used by the processor 122 to communicate with the host 112. In the embodiment shown, the client 110 takes the form of a software driven apparatus; that is, the client 110 derives its functionality from the processor 122 executing a set of software or program instructions 132. While this is an advantageous embodiment, it should be noted that if so desired, the functionality of the present invention could be achieved using hardware logic components. This modification is within the scope of the present invention.

The client 110 may optionally further comprise one or more output devices 128 coupled to the main bus 120, and one or more user input devices 130 coupled to the main bus 120. The output devices 128 may include any of a number of devices designed to convey information to the user, including but not limited to a visual display, an audio system (e.g. sound card and speakers), and a printer. The input devices 130 may include any of a number of devices designed to allow a user to provide input to the client 110, including but not limited to a keyboard, a mouse, an electronic pen and pad, and a touch sensitive screen. Whether these devices 128, 130 are included as part of the client 110 depends upon the particular client-host arrangement. More specifically, if the host 112 is a point-of-sale (POS) terminal or a reader and the client is a smart card, then it would be the host 120 that would have the input and output devices. On the other hand, if the client 110 is a personal computer and the host 112 is a server coupled to the client 110 via a communications line (in which case, the interface port 126 would be a modem), then the client 110 would most likely comprise the input and output devices 130, 128. These are only two possible client-host configurations. Other arrangements may also be implemented within the scope of the present invention.

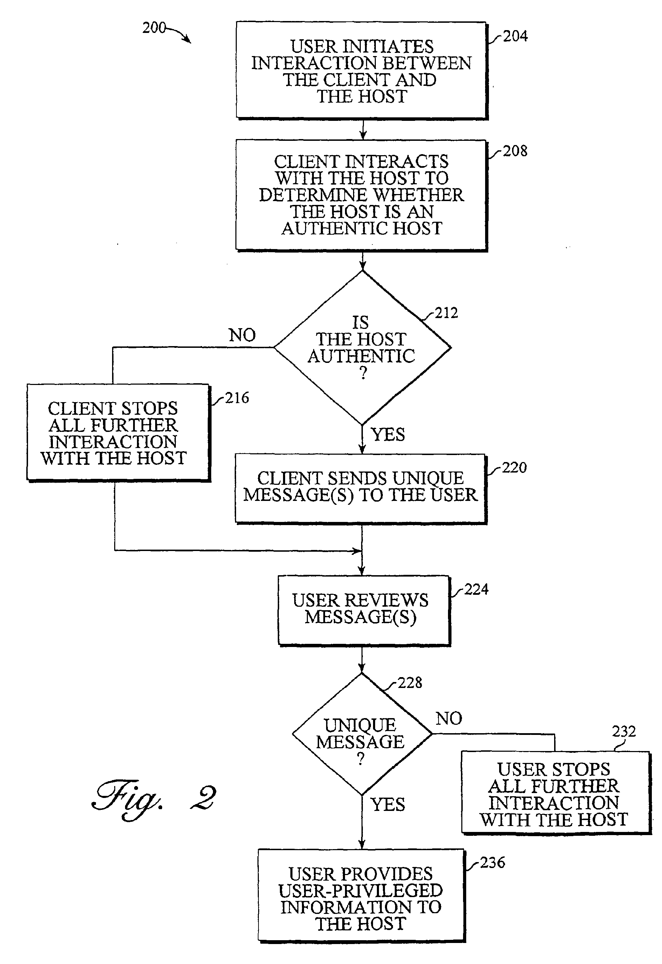

With reference to the flow diagram shown in Fig. 2 and the system diagram of Fig. 1, the methodology of the present invention will now be described. A user begins a transaction by initiating (204) interaction between the client 110 and the host 120. In a smart card-POS terminal type of arrangement, this is done by simply inserting the smart card into the POS terminal. In a client-server arrangement, this is done by setting up a connection between the personal computer and the server using a modem 126. Once interaction is initiated, the processor 122 executes the authentication instructions 132 stored in the storage 124 to carry out the methodology of the present invention. Under control of the instructions 132, the processor 122 interacts (208) with the host 112 to determine whether the host is an authentic host. This determination may be made using any known authentication methodology. In one embodiment, step 208 is carried out by way of a challenge/response protocol using public/private key encryption.

More specifically, the processor 122 takes a set of information (such as a random number generated by the processor 122) and encrypts it using a public key of an authentic host to derive an encrypted message. In one embodiment, this public key is pre-established between the client and the authentic host and is stored as part of the data 134 in the storage 124. Once derived, the encrypted message is sent via the interface port 126 to the host 112 as a challenge. The processor 122 then waits for a response.

In response to the challenge, an authentic host would decrypt the message using a private key associated with the public key used by the client. The result of this operation would be the original information (i.e. the random number) sent by the processor 122. It should be noted that only an authentic host would have this private key; therefore, only an authentic host would be able to properly decrypt the challenge message. Once the original information is derived, an authentic host would re-encrypt the information, this time using a client public key, to derive a second encrypted message. The client public key is a key which is pre-established between the client 110 and the authentic host. Once derived, the second encrypted message is sent to the client 110 via the interface port 126 as a response.

Once the response is received, the processor 122 tests the response by decrypting it using a private key associated with the client public key used by the authentic host. This private key is stored as part of the data 134 in the storage 124 and is known only to the client 110. If the host 112 is an authentic host, the result of this decryption process will be the original information sent by the processor 122. If the result is not the original information sent by the processor 122, or if no response is received, then the processor 122 knows that the host 112 is not an authentic host. In this manner, the processor 122 and hence the client 110 determines (212) whether the host 112 is an authentic host. If host 112 is an authentic host, then it will most likely also try to authenticate the client 110. This authentication may be carried out using the same challenge/response methodology as that described above.

If the processor 122 determines that the host 112 is not an authentic host, then the processor 122 stops (216) all further interaction with the host 112. On the other hand, if the processor 122 determines that the host 112 is an authentic host, then the processor 122 sends (220) one or more of the unique messages 136 stored in the storage 124 to the user to signify to the user that: (1) the client 110 has interacted with the host 112; and (2) the client 110 has determined that the host 112 is an authentic host. In the smart card-POS configuration, the processor 122 sends the unique message to the host 112 for output to the user using one of the output devices of the host 112. In the client-server configuration, the processor 122 sends the unique message to one of its own output devices 128 to convey the message to the user.

Thereafter, the user reviews (224) whatever message is returned as a result of the client-host interaction. If the return message is one of the unique messages expected by the user, then the user is assured that the client has interacted with the host 112 and that the host 112 is an authentic host; hence, the user can safely provide (236) to the host 112 whatever user-privileged information is requested by the host 112. As used herein, the term user-privileged information refers broadly to any information that is used by an authentic host to authenticate a user. User-privileged information is secret information known only to an authentic host, an authentic user, and authorized representatives of the authentic user, and can be any type of information including but not limited to that of a PIN or an encryption key. Once the user-privileged information is provided to an authentic host, it is used by the authentic host to authenticate a user. If the user is authenticated, then a transaction will be allowed to take place.

On the other hand, if the user determines (228) that the return message is not one of the unique messages expected by the user, then the user knows that either the client did not interact properly with the host 112, or that the host is not an authentic host. In either case, the user stops (232) all further interaction with the host 112. A point to note here is that, unlike the prior art, the present invention does not allow the authentication process between the client 110 and the host 112 to be bypassed or ignored. If the authentication process is not carried out, the processor 122 will not send any of the unique messages 136. If the processor 122 does not send any of the unique messages, then there is no way for the fraudulent host to know what message to send to the user. As a result, the fraudulent host will not be able to send the proper unique message to the user. If the proper message is not sent, the user will not provide to the host any user-privileged information. In this manner, the present invention prevents the theft of user-privileged information by a fraudulent host.

As an enhancement to the present invention, it is possible to base the unique message that is sent by the processor 122 upon the current value of one or more parameters. For example, in determining which unique message to send, the processor 122 may check on the amount of the transaction that the user is trying to process. If the amount is less than $1,000, the processor 122 may send the unique message "Let's conduct a transaction". On the other hand, if the amount is over $1,000, the processor 122 may send the unique message "Big Spender!". By varying the unique messages, an extra layer of protection is afforded in that even if a fraudulent host is able to replicate the unique message for the lower amount transactions, the higher amount transactions are still protected. The amount of the transaction is just one of the possible parameters that that processor 122 can check. Other parameters may also be checked within the scope of the present invention.

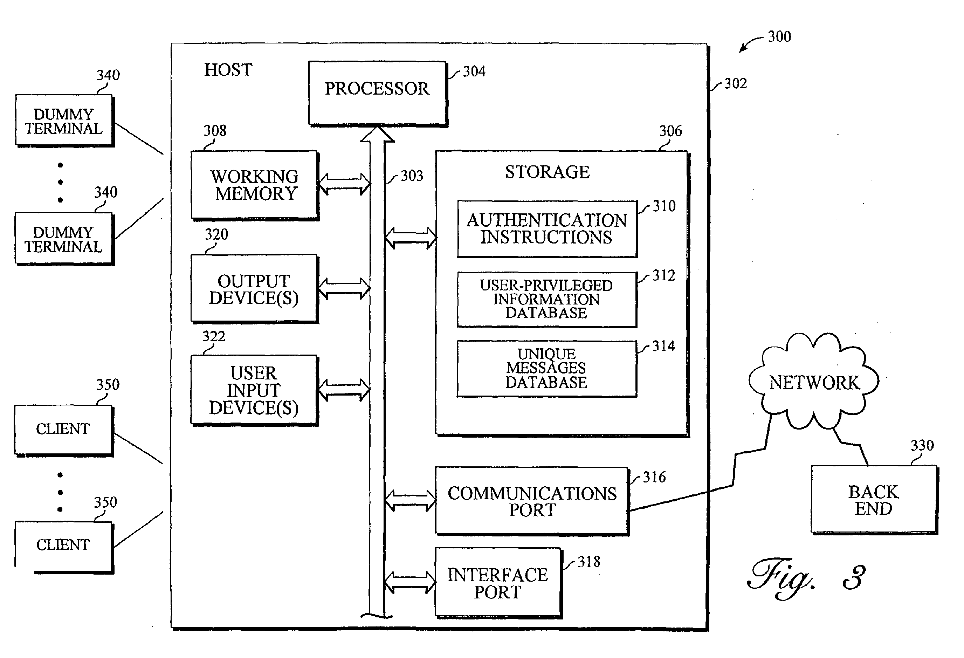

Thus far, the invention has been described in terms of a client-host system. It should be noted, however, that the invention may also be implemented in a host-based system. As used herein, the term host based system refers to any system in which the authentication methodology of the present invention is implemented by a host rather than a client. A block diagram of such a system is shown in Fig. 3.

As shown in Fig. 3, the host 302 of a host based system 300 comprises a main bus 303 and a plurality of components coupled to the main bus 303, including a processor 304, a working memory 308, and a storage 306. The storage 306 may take the form of any storage medium including but not limited to magnetic media, optical media, and non-volatile memory, and has stored within it a set of authentication instructions 310. These authentication instructions 310 are executed by the processor 304 to carry out the authentication methodology of the present invention. The working memory 308 is used by the processor 304 to facilitate instruction execution and data manipulation. In the embodiment shown, the host 302 takes the form of a software driven apparatus; that is, the host 302 derives its functionality from the processor 304 executing a set of software or program instructions 310. While this is an advantageous embodiment, it should be noted that if so desired, the functionality of the present invention could be achieved using hardware logic components. This modification is within the scope of the present invention.

The storage 306 further contains within it a user-privileged information database 312 and a unique messages database 314. The user-privileged information database 312 contains information used by the processor 304 to authenticate users. This database 312 may contain such information as PIN's and encryption keys which are compared with user-privileged information entered by users (as discussed further below) to verify that the users are authentic users. The unique messages database 314 contains messages which are used by the processor 304 to signify to users that the host 302 is an authentic host. In one embodiment, the unique messages are secret messages that are provided to the host 302 by the users prior to the users interacting with the host 302. The unique messages may take any form, including but not limited to that of a text message, an audio message or sound, or a graphical display of some kind. For purposes of the present invention, anything that is distinctive to the users that would normally not be known or guessed by a fraudulent host could be used as the unique messages.

The host 304 may optionally further comprise a communications port 316, an interface port 318, output devices 320, and input devices 322, all of which are coupled to the main bus 303. Whether these components are included as part of the host 302 depends upon the specific embodiment taken by the host (discussed further below). The communications port 316 enables the host 302 to communicate through a network to a back end 330 system. The back end system 330 and the host 302 may interact to perform any desired function. Functionality between the two components may be divided freely, and if so desired, the functionality of the back end 330 may be folded completely into the host 302. The communications port 316 also allows the host 302 to communicate with dummy terminals 340 and clients 350.

The interface port 318 allows the host 302 to communicate with tokens. These tokens, such as ATM cards, are utilized by users to provide user identification information to the host 302 and generally to interact with the host 302.

The output devices 320 may include any of a number of devices designed to convey information to the users, including but not limited to a visual display, an audio system (e.g. sound card and speakers), and a printer. The input devices 322 may include any of a number of devices designed to allow users to provide input to the client 110, including but not limited to a keyboard, a mouse, an electronic pen and pad, and a touch sensitive screen.

According to the present invention, the host 302 may be implemented in a variety of different forms. For example, the host 302 may take the form of a POS terminal (e.g. an ATM) which interacts with inactive tokens. In this form, the host 302 would include the interface port 318, the output devices 320, the input devices 322, and most likely the communications port 316. The host 302 may also take the form of a mainframe computer coupled to a plurality of dummy terminals 340. In this implementation, the host 302 would include the communications port 316 but not the interface port 318 or the output 320 or input 322 devices. In addition, the host 302, may also take the form of a server coupled to a plurality of clients 350. In this form, the host 302 would include the communications port 316 but not the interface port 318 or the output 320 or input 322 devices. The host 302 may take on these and many other forms. In fact, the host 302 may be implemented as the authentication mechanism in any system to which a user needs to log in or register using user-privileged information.

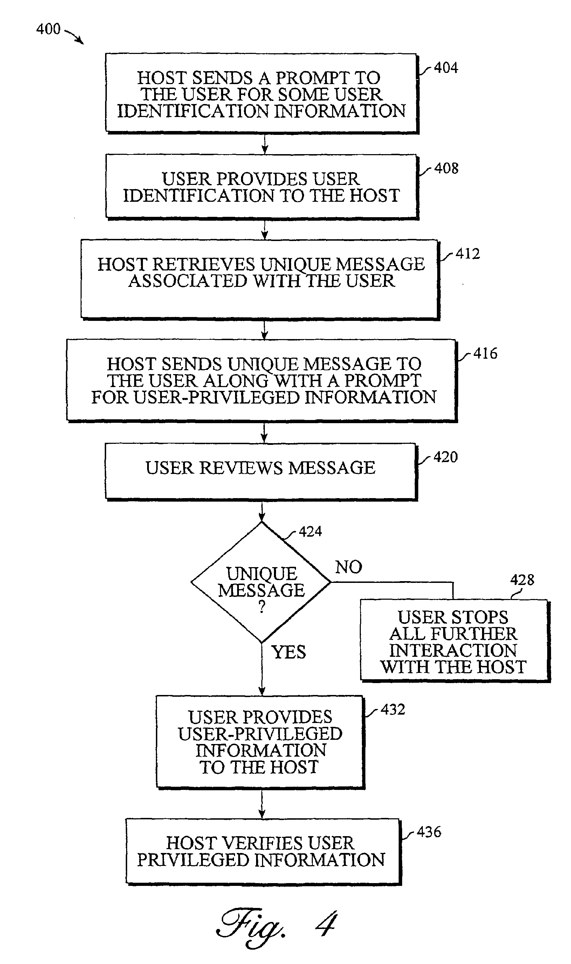

With reference to the flow diagram illustrated in Fig. 4, and the system diagram of Fig. 3, the operation of host 302 will now be described. Under direction of the authentication instructions 310 stored in the storage 306, the processor 304 of host 302 implements the methodology of the present invention. Processor 304 begins the authentication process by sending (404) a prompt to the user for some user identification information. This information may include the user's name, the user's account number, the user's login, etc. but does not include any user-privileged information. In response, the user provides (408) the user identification information to the host 302.

Once the user identification information is received, the processor 304 uses the identification information to retrieve (412) from the unique messages database 314 one or more unique messages associated with the identified user. The unique message is a secret message previously provided to the host 302 by the user. Each user has one or more customized unique messages associated therewith. The processor 304 thereafter sends (416) the unique message to the user, along with a prompt for some user-privileged information, such as a password, a PIN, or an encryption key.

Prior to providing the user-privileged information requested by the host 302, the user reviews (420) whatever message is returned by the host in response to the user identification information. If the user determines (424) that the return message is the unique message expected by the user, then the user provides (432) the requested user-privileged information to the host 302.

On the other hand, if the return message is not the unique message expected by the user, then the user knows that the host 302 is not an authentic host. In such a case, the user will stop (428) all further interaction with the host 302 and will not provide any user-privileged information to the host. In this way, the present invention enables the user to authenticate the host 302 prior to providing any user-privileged information. This helps to ensure that the user-privileged information will not be provided to a fraudulent host.

If the host 302 is an authentic host, and the user does provide a set of user-privileged information, then the processor 304 will verify (436) the information provided by the user against the information stored in the user-privileged information database 312 stored in the storage 306. If the two sets of information match, then the host 302 knows that the user is an authentic user. In such a case, the host 302 will further interact with the user.

Thus far, the invention has been described in the contexts of a client-host system and a host-based system. While the present invention may be advantageously implemented in such system configurations, it should be noted that the invention is not so limited. Rather, it may be generally applied to any type of system.

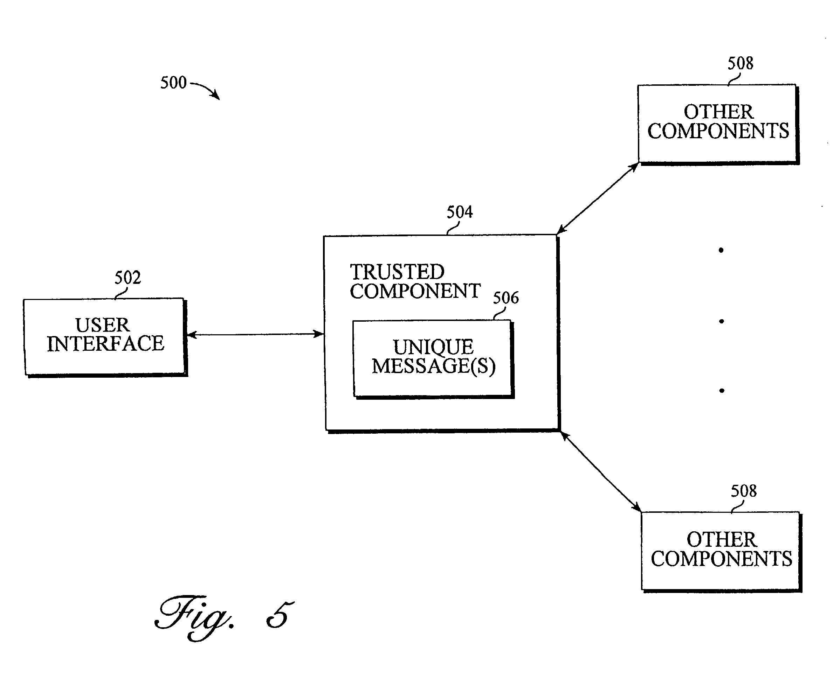

Fig. 5 shows an overall general system 500 in which the present invention may be implemented, the system 500 comprising a user interface 502 for receiving input from and providing output to a user, a trusted component 504, and one or more other components 508. In system 500, the trusted component 504 is the component responsible for implementing the methodology of the present invention. The purpose of the trusted component 504 is to provide assurance to the user that the overall system is authentic. That is, if the user can determine that the trusted component is present in the system 500, then the user knows that the system is authentic.

In system 500, the trusted component 504 may be implemented in any form and in any part of the system. That is, it may be implemented as a software module or as a hardware component (e.g. a dedicated chip). It may be implemented as part of a client, a host, or any other component. For example, in the client-host implementation (Fig. 1) described previously, the trusted component 504 was implemented as part of the client 110. In the host-based system (Fig. 3) described above, the trusted component 504 was implemented as part of the host 302. If so desired, the trusted component 504 may be implemented as part of any other component. The particular implementation of the trusted component 504 is not important. What is important is that the trusted component 504 provide to the user some assurance that the system 500 is authentic before the user provides any user-privileged information to the system 500.

In achieving this purpose, the trusted component 504 operates as follows. It first receives, via the user interface 502, a set of user identification information. This information may include the user's name, the user's account number, the user's login, etc., but does not include any user-privileged information. The trusted component 504 then uses the identification information to retrieve from a storage 506 one or more unique messages associated with the identified user. The unique message is a secret message that only an authentic trusted component 504 would know. Prior to sending the unique message back to the user, the trusted component 504 performs any verifications necessary to authenticate the user interface 502 and the other components 508 of the system 500. Thereafter, the trusted component 504 sends the unique message to the user, via the user interface 502, to provide assurance to the user that the system 500 is authentic. If the unique message is the one expected by the user, then the user knows that the trusted component 504 is in the system 500, and hence, that the system 500 is authentic. As a result, the user knows that he can safely provide user-privileged information to the system 500. On the other hand, if the return message is not the unique message expected by the user, then the user knows that the system 500 is not an authentic system. In such a case, the user will stop all further interaction with the system 500. In this manner, the present invention enables the user to authenticate the system 500 prior to providing any user-privileged information to the system 500. This in turn prevents user-privileged information from being provided to fraudulent systems.

At this point, it should be noted that although the invention has been described with reference to specific embodiments, it should not be construed to be so limited. Various modifications can be made by those of ordinary skill in the art with the benefit of this disclosure without departing from the spirit of the invention. Thus, the invention should not be limited by the specific embodiments used to illustrate it but only by the scope of the appended claims.

## Claims

1. A method implemented by a client (110) for enabling a user to authenticate a host (112), comprising:
interacting (208) with the host (112) to determine whether the host (112) is an authentic host (112); and
in response to a determination that the host (112) is an authentic host (112), sending (220) a unique message that signifies to the user that the client (110) has interacted with the host (112) and that the host (112) is an authentic host (112), wherein the unique message is a secret message that is not known by the host (112) and that was previously provided to the client (110) by the user;
**characterised in that** the step of sending a unique message comprises:
determining the current value of one or more parameters;
selecting, based upon the current value of the one or more parameters, one of a plurality of unique messages; and
sending the selected unique message to the user to signify to the user that the client (110) has interacted with the host (112) and that the host (112) is an authentic host (112).

2. The method of claim 1, wherein the unique message is sent to the host (112) for display by the host (112) to the user.

3. The method of claim 1, wherein interacting with the host (112) comprises:
sending a challenge to the host (112);
receiving from the host (112) a response to the challenge; and
determining based upon the response whether the host (112) is an authentic host (112).

4. A client (110) for interacting with a host (112), the client (110) enabling a user to authenticate the host (112), the client (110) comprising:
storage for storing a unique message;
a mechanism for interacting with the host to determine whether the host (112) is an authentic host; and
a mechanism for sending, in response to a determination that the host (112) is an authentic host (112), the unique message to the user to signify to the user that the client (110) has interacted with the host (112) and that the host (112) is an authentic host, wherein the unique message is a secret message that is not known by the host (112) and that was previously provided to the client (110) by the user;
**characterised in that** the storage stores a plurality of unique messages, and wherein the mechanism for sending comprises:
a mechanism for determining the current value of one or more parameters;
a mechanism for selecting, based upon the current value of the one or more parameters, one of the plurality of unique messages stored in the storage; and
a mechanism for sending the selected unique message to the user to signify to the user that the client (110) has interacted with the host (112) and that the host (112) is an authentic host.

5. The client (110) of claim 4, wherein the mechanism for interacting with the host (112) comprises:
a mechanism for sending a challenge to the host (112);
a mechanism for receiving from the host (112) a response to the challenge; and
a mechanism for determining based upon the response whether the host (112) is an authentic host (112).

6. A method implemented by a host (112) for enabling a user to verify that the host (112) is an authentic host (112), comprising:
receiving a set of user identification information from the user;
retrieving, based upon the user identification information, a unique message associated with the user, the unique message being a secret message that only an authentic host (112) would know; and
sending the unique message to the user to enable the user to verify that the host (112) is an authentic host (112), wherein the unique message is a secret message previously provided to the host (112) by the user;
**characterised in that** the step of sending a unique message comprises:
determining the current value of one or more parameters;
selecting, based upon the current value of the one or more parameters, one of a plurality of unique messages; and
sending the selected unique message to the user to signify to the user that the client (110) has interacted with the host (112) and that the host (112) is an authentic host (112).

7. The method of claim 6, further comprising:
receiving a set of user-privileged information from the user, the user providing the user-privileged information only after the user has verified that the host (112) is an authentic host (112); and
determining, based upon the user-privileged information, whether the user is an authentic user.

8. A host (112) which enables a user to verify the authenticity of the host (112), comprising:
storage for storing a unique message associated with the user;
a mechanism for receiving from the user a set of user identification information;
a mechanism for retrieving, based upon the user identification information, the unique message associated with the user, the unique message being a secret message that only an authentic host (112) would know; and
a mechanism for sending the unique message to the user to enable the user to verify that the host (112) is an authentic host (112), wherein the unique message is a secret message previously provided to the host (112) by the user;
**characterised in that** the storage stores a plurality of unique messages, and wherein the mechanism for sending comprises:
a mechanism for determining the current value of one or more parameters;
a mechanism for selecting, based upon the current value of the one or more parameters, one of the plurality of unique messages stored in the storage; and
a mechanism for sending the selected unique message to the user to signify to the user that the client (110) has interacted with the host (112) and that the host (112) is an authentic host.

9. The host (112) of claim 8, further comprising:
a mechanism for receiving from the user a set of user-privileged information, the user entering the user-privileged information only after the user has verified that the host (112) is an authentic host (112); and
a mechanism for determining, based upon the user-privileged information, whether the user is an authentic user.

## Patentansprüche

1. Verfahren, das von einem Client (110) implementiert wird, um einem Benutzer zu ermöglichen, einen Host (112) zu authentisieren, umfassend:
Interagieren (208) mit dem Host (112), um zu bestimmen, ob der Host (112) ein authentischer Host (112) ist; und
in Reaktion auf eine Feststellung, dass der Host (112) ein authentischer Host (112) ist, Senden (220) einer eindeutigen Nachricht, die dem Benutzer anzeigt, dass der Client (110) mit dem Host (112) interagiert hat und dass der Host (112) ein authentischer Host (112) ist, wobei die eindeutige Nachricht eine geheime Nachricht ist, die dem Host (112) nicht bekannt ist und die vom Benutzer dem Client (110) im Voraus zur Verfügung gestellt wurde;
**dadurch gekennzeichnet, dass** der Schritt des Sendens einer eindeutigen Nachricht umfasst:
Bestimmen des aktuellen Wertes eines Parameters oder mehrerer Parameter;
Auswählen einer von mehreren eindeutigen Nachrichten auf der Grundlage des aktuellen Wertes des einen Parameters oder der mehreren Parameter; und
Senden der ausgewählten eindeutigen Nachricht an den Benutzer, um dem Benutzer anzuzeigen, dass der Client (110) mit dem Host (112) interagiert hat und dass der Host (112) ein authentischer Host (112) ist.

2. Verfahren nach Anspruch 1, wobei die eindeutige Nachricht an den Host (112) gesendet wird, um sie mittels des Hosts (112) dem Benutzer anzuzeigen.

3. Verfahren nach Anspruch 1, wobei das Interagieren mit dem Host (112) umfasst:
Senden einer Aufforderung an den Host (112);
Empfangen einer Antwort auf die Aufforderung vom Host (112); und
Bestimmen auf der Grundlage der Antwort, ob der Host (112) ein authentischer Host (112) ist.

4. Client (110) für das Interagieren mit einem Host (112), wobei der Client (110) einem Benutzer ermöglicht, den Host (112) zu authentisieren, wobei der Client (110) umfasst:
einen Speicher zum Speichern einer eindeutigen Nachricht;
eine Einrichtung zum Interagieren mit dem Host, um zu bestimmen, ob der Host (112) ein authentischer Host ist; und
eine Einrichtung zum Senden der eindeutigen Nachricht an den Benutzer in Reaktion auf eine Feststellung, dass der Host (112) ein authentischer Host (112) ist, um den Benutzer anzuzeigen, dass der Client (110) mit dem Host (112) interagiert hat und dass der Host (112) ein authentischer Host ist, wobei die eindeutige Nachricht eine geheime Nachricht ist, die dem Host (112) nicht bekannt ist und vom Benutzer im Voraus dem Client (110) zur Verfügung gestellt wurde;
**dadurch gekennzeichnet, dass** der Speicher mehrere eindeutige Nachrichten speichert, wobei die Einrichtung zum Senden umfasst:
eine Einrichtung zum Bestimmen des aktuellen Wertes eines Parameters oder mehrerer Parameter;
eine Einrichtung zum Auswählen einer der mehreren eindeutigen Nachrichten, die im Speicher gespeichert sind, auf der Grundlage des aktuellen Wertes des einen Parameters oder der mehreren Parameter; und
eine Einrichtung zum Senden der ausgewählten eindeutigen Nachricht an den Benutzer, um dem Benutzer anzuzeigen, dass der Client (110) mit dem Host (112) interagiert hat und dass der Host (112) ein authentischer Host ist.

5. Client (110) nach Anspruch 4, wobei die Einrichtung zum Interagieren mit dem Host (112) umfasst:
eine Einrichtung zum Senden einer Aufforderung an den Host (112);
eine Einrichtung zum Empfangen einer Antwort auf die Aufforderung vom Host (112); und
eine Einrichtung, um auf der Grundlage der Antwort zu bestimmen, ob der Host (112) ein authentischer Host (112) ist.

6. Verfahren, dass von einem Host (112) implementiert wird, um einem Benutzer zu ermöglichen, zu überprüfen, dass der Host (112) ein authentischer Host (112) ist, umfassend:
Empfangen eines Satzes von Benutzeridentifikationsinformationen vom Benutzer;
Abrufen einer dem Benutzer zugeordneten eindeutigen Nachricht auf der Grundlage der Benutzeridentifikationsinformationen, wobei die eindeutige Nachricht eine geheime Nachricht ist, die nur ein authentischer Host (112) kennen würde; und
Senden der eindeutigen Nachricht an den Benutzer, um dem Benutzer zu ermöglichen, zu überprüfen, dass der Host (112) ein authentischer Host (112) ist, wobei die eindeutige Nachricht eine geheime Nachricht ist, die dem Host (112) vom Benutzer im Voraus zur Verfügung gestellt worden ist;
**dadurch gekennzeichnet, dass** der Schritt des Sendens einer eindeutigen Nachricht umfasst:
Bestimmen des aktuellen Wertes eines Parameters oder mehrerer Parameter;
Auswählen einer von mehreren eindeutigen Nachrichten auf der Grundlage des aktuellen Wertes des einen Parameters oder der mehreren Parameter; und
Senden der ausgewählten eindeutigen Nachricht an den Benutzer, um dem Benutzer anzuzeigen, dass der Client (110) mit dem Host (112) interagiert hat und dass der Host (112) ein authentischer Host (112) ist.

7. Verfahren nach Anspruch 6, ferner umfassend:
Empfangen eines Satzes von benutzerprivilegierten Informationen vom Benutzer, wobei der Benutzer die benutzerprivilegierten Informationen nur bereitstellt, nachdem der Benutzer überprüft hat, dass der Host (112) ein authentischer Host (112) ist; und
Bestimmen auf der Grundlage der benutzerprivilegierten Informationen, ob der Benutzer ein authentischer Benutzer ist.

8. Host (112), der einem Benutzer ermöglicht, die Authentizität des Hosts (112) zu überprüfen, umfassend:
einen Speicher zum Speichern einer eindeutigen Nachricht, die dem Benutzer zugeordnet ist;
eine Einrichtung zum Empfangen eines Satzes von Benutzeridentifikationsinformationen vom Benutzer;
eine Einrichtung zum Abrufen der dem Benutzer zugeordneten eindeutigen Nachricht auf der Grundlage der Benutzeridentifikationsinformationen, wobei die eindeutige Nachricht eine geheime Nachricht ist, die nur ein authentischer Host (112) kennen würde; und
eine Einrichtung zum Senden der eindeutigen Nachricht an den Benutzer, um dem Benutzer zu ermöglichen, zu überprüfen, dass der Host (112) ein authentischer Host (112) ist, wobei die eindeutige Nachricht eine geheime Nachricht ist, die dem Host (112) im Voraus vom Benutzer zur Verfügung gestellt worden ist;
**dadurch gekennzeichnet, dass** der Speicher mehrere eindeutige Nachrichten speichert, wobei die Einrichtung zum Senden umfasst:
eine Einrichtung zum Bestimmen des aktuellen Wertes eines Parameters oder mehrerer Parameter;
eine Einrichtung zum Auswählen einer der mehreren eindeutigen Nachrichten, die im Speicher gespeichert sind, auf der Grundlage des aktuellen Wertes des einen Parameters oder der mehreren Parameter; und
eine Einrichtung zum Senden der ausgewählten eindeutigen Nachricht an den Benutzer, um dem Benutzer anzuzeigen, dass der Client (110) mit dem Host (112) interagiert hat und dass der Host (112) ein authentischer Host ist.

9. Host (112) nach Anspruch 8, ferner umfassend:
eine Einrichtung zum Empfangen eines Satzes von benutzerprivilegierten Informationen vom Benutzer, wobei der Benutzer die benutzerprivilegierten Informationen nur eingibt, nachdem der Benutzer überprüft hat, dass der Host (112) ein authentischer Host (112) ist; und
eine Einrichtung zum Bestimmen auf der Grundlage der benutzerprivilegierten Informationen, ob der Benutzer ein authentischer Benutzer ist.

## Revendications

1. Procédé mis en oeuvre par un client (110) destiné à autoriser un utilisateur à authentifier un hôte (112), comprenant :
l'interaction (208) avec l'hôte (112) pour déterminer si l'hôte (112) est ou non un hôte authentique (112) ; et
en réponse à la détermination du fait que l'hôte (112) est un hôte authentique (112), l'envoi (220) d'un message unique qui signifie à l'utilisateur que le client (110) a interagi avec l'hôte (112) et que l'hôte (112) est un hôte authentique (112), dans lequel le message unique est un message secret qui n'est pas connu de l'hôte (112) et qui a été fourni auparavant au client (110) par l'utilisateur ;
**caractérisé en ce que** l'étape d'envoi d'un message unique comprend :
la détermination de la valeur courante d'un ou plusieurs paramètres ;
le choix, basé sur la valeur courante des un ou plusieurs paramètres, de l'un parmi une pluralité de messages uniques ; et
l'envoi du message unique choisi à l'utilisateur pour signifier à l'utilisateur que le client (110) a interagi avec l'hôte (112) et que l'hôte (112) est un hôte authentique (112).

2. Procédé selon la revendication 1, dans lequel le message unique est envoyé à l'hôte (112) en vue d'un affichage par l'hôte (112) à l'intention de l'utilisateur.

3. Procédé selon la revendication 1, dans lequel l'interaction avec l'hôte (112) comprend :
l'envoi à l'hôte (112) d'une interpellation ;
la réception depuis l'hôte (112) d'une réponse à l'interpellation ; et
la détermination, basée sur la réponse, du fait que l'hôte (112) est ou non un hôte authentique (112).

4. Client (110) destiné à interagir avec un hôte (112), le client (110) autorisant un utilisateur à authentifier l'hôte (112), le client (110) comprenant :
une mémoire destinée à stocker un message unique ;
un mécanisme destiné à interagir avec l'hôte pour déterminer si l'hôte (112) est ou non un hôte authentique ; et
un mécanisme destiné à envoyer, en réponse à une détermination du fait que l'hôte (112) est un hôte authentique (112), le message unique à l'utilisateur pour signifier à l'utilisateur que le client (110) a interagi avec l'hôte (112) et que l'hôte (112) est un hôte authentique, dans lequel le message unique est un message secret qui n'est pas connu de l'hôte (112) et qui a été fourni auparavant au client (110) par l'utilisateur ;
**caractérisé en ce que** la mémoire stocke une pluralité de messages uniques, et dans lequel le mécanisme pour l'envoi comprend :
un mécanisme destiné à déterminer la valeur courante d'un ou plusieurs paramètres ;
un mécanisme destiné à choisir, sur la base de la valeur courante des un ou plusieurs paramètres, un message parmi la pluralité de messages uniques stockés dans la mémoire ; et
un mécanisme destiné à envoyer le message unique choisi à l'utilisateur pour signifier à l'utilisateur que le client (110) a interagi avec l'hôte (112) et que l'hôte (112) est un hôte authentique.

5. Client (110) selon la revendication 4, dans lequel le mécanisme destiné à l'interaction avec l'hôte (112) comprend :
un mécanisme destiné à envoyer une interpellation à l'hôte (112) ;
un mécanisme destiné à recevoir depuis l'hôte (112) une réponse à l'interpellation ; et
un mécanisme destiné à déterminer sur la base de la réponse si l'hôte (112) est ou non un hôte authentique (112).

6. Procédé mis en oeuvre par un hôte (112) pour autoriser un utilisateur à vérifier que l'hôte (112) est un hôte authentique (112), comprenant :
la réception d'un ensemble d'informations d'identification utilisateur depuis l'utilisateur ;
la récupération, sur la base des informations d'identification utilisateur, d'un message unique associé à l'utilisateur, le message unique étant un message secret que seul un hôte authentique (112) connaîtra ; et
l'envoi du message unique à l'utilisateur pour autoriser l'utilisateur à vérifier que l'hôte (112) est un hôte authentique (112), dans lequel le message unique est un message secret fourni auparavant à l'hôte (112) par l'utilisateur ;
**caractérisé ce que** l'étape d'envoi d'un message unique comprend :
la détermination de la valeur courante d'un ou plusieurs paramètres ;
le choix, sur la base de la valeur courante des un ou plusieurs paramètres, d'un message parmi une pluralité de messages uniques ; et
l'envoi du message unique choisi à l'utilisateur pour signifier à l'utilisateur que le client (110) a interagi avec l'hôte (112) et que l'hôte (112) est un hôte authentique (112).

7. Procédé selon la revendication 6 comprenant de plus :
la réception d'un ensemble d'informations privilégiées utilisateur depuis l'utilisateur, l'utilisateur fournissant les informations privilégiées utilisateur seulement après que l'utilisateur a vérifié que l'hôte (112) est un hôte authentique (112) ; et
la détermination, sur la base des informations privilégiées utilisateur, du fait que l'utilisateur est ou non un utilisateur authentique.

8. Hôte (112) qui autorise un utilisateur à vérifier l'authenticité de l'hôte (112), comprenant :
une mémoire destinée à stocker un message unique associé à l'utilisateur ;
un mécanisme destiné à recevoir depuis l'utilisateur un ensemble d'informations d'identification utilisateur ;
un mécanisme destiné à récupérer, sur la base des informations d'identification utilisateur, le message unique associé à l'utilisateur, le message unique étant un message secret que seul un hôte authentique (112) connaîtra ; et
un mécanisme destiné à envoyer le message unique à l'utilisateur pour autoriser l'utilisateur à vérifier que l'hôte (112) est un hôte authentique (112), dans lequel le message unique est un message secret fourni auparavant à l'hôte (112) par l'utilisateur ;
**caractérisé en ce que** la mémoire stocke une pluralité de messages uniques, et dans lequel le mécanisme pour l'envoi comprend :
un mécanisme destiné à déterminer la valeur courante d'un ou plusieurs paramètres ;
un mécanisme destiné à choisir, sur la base de la valeur courante des un ou plusieurs paramètres, un message parmi la pluralité de messages uniques stockés dans la mémoire ; et
un mécanisme destiné à envoyer le message unique choisi à l'utilisateur pour signifier à l'utilisateur que le client (110) a interagi avec l'hôte (112) et que l'hôte (112) est un hôte authentique.

9. Hôte (112) selon la revendication 8 comprenant de plus :
un mécanisme destiné à recevoir depuis l'utilisateur un ensemble d'informations privilégiées utilisateur, l'utilisateur entrant les informations privilégiées utilisateur seulement après que l'utilisateur a vérifié que l'hôte (112) est un hôte authentique (112) ; et
un mécanisme destiné à déterminer, sur la base de des informations privilégiées utilisateur, si l'utilisateur est ou non un utilisateur authentique (112).
